# DEMANDE DE BREVET EUROPEEN

(11) **EP 4 795 990 A1**
(43) Date de publication de la demande: **26.08.2026**
(21) Numéro de dépôt: 26158658.0
(22) Date de dépôt: 13.02.2026
(51) Int. Cl.: A47J 37/06

(54) **GAUFRIER PERMETTANT DE RÉDUIRE LA TEMPÉRATURE EXTERNE**

(30) Priorité: 21.02.2025 FR 2501836
(71) Demandeur: Lagrange, 69390 Vourles (FR)
(72) Inventeur: CONDAMIN, Thibaud, 69007 LYON (FR); HISLER, Gary, 69007 LYON (FR); LAGRANGE, Clément, 69007 LYON (FR)
(74) Mandataire: Opilex

(57) **Abrégé**

L'invention porte sur un gaufrier (1), comprenant :
-une plaque de cuisson (21) ;
-une résistance électrique chauffante (31) ;
-un capteur de température (4);
-une interface de sélection (51) d'une instruction de température de consigne;
-un indicateur de fin de cuisson (52) ;
-un circuit de commande (9) configuré pour :
-définir une température de début de chauffe et une température de fin de chauffe en fonction de l'instruction de température de consigne récupérée ;
-définir une durée de maintien en fonction de l'instruction de température de consigne récupérée ;
-lorsque la température du capteur de température (4) tombe sous la température de début de chauffe, alimenter la résistance électrique jusqu'à ce que la température dépasse la température de fin de chauffe, couper l'alimentation de la résistance électrique (31) pendant ladite durée de maintien et activer l'indicateur de fin de cuisson (52) à l'issue de ladite durée de maintien.

## Description

L'invention concerne les gaufriers, et en particulier la gestion de la température du capot externe d'un gaufrier électrique.

Les gaufriers domestiques disposent usuellement de plaques métalliques chauffantes. Les plaques chauffantes sont articulées pour permettre d'enserrer la pâte à gaufre entre les plaques puis de libérer la gaufre après cuisson. Les plaques sont le plus souvent amovibles d'un châssis, afin de permettre leur nettoyage après utilisation. La chauffe des plaques métalliques est obtenue par des résistances électriques positionnées à l'arrière des plaques et fixées au châssis. Un capotage forme la surface externe du gaufrier et les utilisateurs peuvent être amenés à entrer en contact avec ce capotage.

Afin de réguler la cuisson des gaufres, la plupart des gaufriers incluent des thermostats mécaniques positionnés au dos des plaques chauffantes. Lorsque la température du thermostat dépasse une température de consigne, le courant est coupé dans la résistance chauffante. La chauffe est relancée lorsque la température du thermostat tombe sous une température d'activation. La température de consigne du thermostat est soit fixe, soit réglable au moyen d'une molette. La température des capots du gaufrier est une résultante de la température de consigne et de la construction du produit.

L'entrée en vigueur de normes de protection plus contraignantes, telle que la Norme NF EN 60335-1, impose des températures de toucher plus basses pour le capotage. Le respect de telles températures de toucher rend la conception du gaufrier complexe, en imposant soit une chauffe moindre et donc un temps de cuisson accru, soit des contraintes d'isolation thermique économiquement impactantes.

Le document US6044755 décrit un gaufrier muni d'une plaque de cuisson et d'une résistance électrique de réchauffage de la plaque de cuisson. Un capteur de température est accolé à la plaque de cuisson. Un circuit de commande récupère l'information de température du capteur et une instruction de température de consigne pour sélectivement alimenter la résistance électrique. Le circuit de commande définit une température de début de chauffe et une température de fin de chauffe en fonction de l'instruction de température de consigne.

Le document EP1318742 décrit un gaufrier muni d'une plaque de cuisson et de conques supérieure et inférieure articulées. Des moyens de verrouillage permettent de maintenir les coques fermées. Des moyens de réglage sont prévus pour définir les paramètres de cuisson. Les moyens de verrouillage sont commandés pour être déverrouillés en fonction des paramètres de cuisson.

L'invention vise à résoudre un ou plusieurs de ces inconvénients. L'invention porte ainsi sur un gaufrier, tel que défini dans les revendications indépendantes annexées.

L'invention porte également sur les variantes des revendications dépendantes. L'homme du métier comprendra que chacune des caractéristiques des variantes des revendications dépendantes ou de la description peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue en perspective d'un exemple de gaufrier selon un mode de réalisation de l'invention, ouvert sur une plaque de cuisson ayant été retirée ;
[Fig.2] est une vue en perspective du gaufrier de la figure 1, ouvert sur les deux plaques de cuisson retirées ;
[Fig.3] est une représentation schématique des interactions d'un circuit de commande avec différents composants du gaufrier ;
[Fig.4], [Fig.5], [Fig.6], [Fig.7], [Fig.8] et [Fig.9] sont des diagrammes illustrant différents paramètres du gaufrier en fonction du temps pour différentes instructions de température et différents modes de chauffe ;
[Fig.10] est un diagramme illustrant différentes configurations de préchauffage lors de l'utilisation d'une sécurité contre l'oubli de plaques de cuisson.

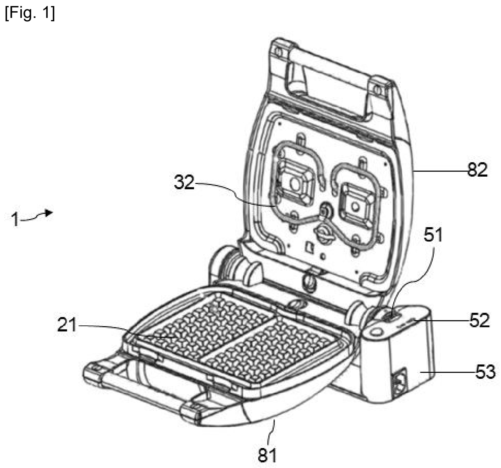

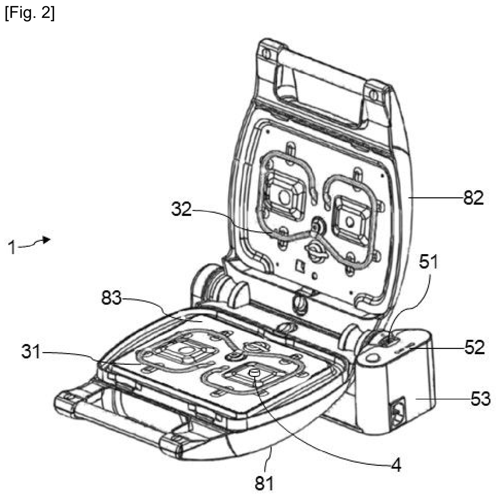

La figure 1 est une vue en perspective d'un exemple de gaufrier 1 selon un mode de réalisation de l'invention. Une plaque de cuisson supérieure a ici été retirée. La figure 2 est une vue en perspective du gaufrier 1, les deux plaques de cuisson ayant été retirées pour illustrer davantage de composants.

Le gaufrier 1 comprend :
- une plaque de cuisson 21. La plaque de cuisson 21 peut de façon connue en soi présenter un relief, ici avec la forme d'une face de gaufre. La plaque de cuisson 21 peut être réalisée en métal recouvert d'un revêtement antidérapant. La plaque de cuisson 21 forme ici une plaque de cuisson inférieure du gaufrier 1 ;
- une résistance électrique chauffante 31 configurée pour réchauffer la plaque de cuisson ;
- un capteur de température 4 accolé à la plaque de cuisson 21. Le capteur de température 4 peut par exemple être une thermistance. Le capteur de température 4 peut être configuré pour venir au contact d'une face arrière de la plaque de cuisson 21. Le capteur de température 4 peut être positionné au contact de la partie médiane de la plaque de cuisson 21 afin de bénéficier d'une information de température proche de la température moyenne de cette plaque de cuisson 21 ;
- une interface de sélection 51 d'une instruction de température de consigne. L'interface de sélection 51 peut par exemple se présenter sous la forme d'une molette pivotante, d'un curseur coulissant ou autre ;
- un indicateur de fin de cuisson 52. L'indicateur de fin de cuisson 52 peut par exemple être mis en œuvre sous la forme d'un indicateur sonore et/ou sous la forme d'un indicateur lumineux.

Dans l'exemple illustré, le gaufrier 1 comprend en outre une autre plaque de cuisson non illustrée, destinée à être placée en vis-à-vis de la plaque 21 pour former une plaque de cuisson supérieure. Les plaques de cuisson sont ici articulées de façon connue en soi pour permettre d'enserrer la pâte à gaufre entre les plaques puis de libérer la gaufre après cuisson. Les plaques de cuisson sont ici avantageusement amovibles par rapport à un châssis 83 du gaufrier, afin de permettre leur nettoyage après utilisation. La plaque de cuisson inférieure 21 est positionnée sur une partie fixe du châssis 83 pour être maintenue horizontale. La plaque de cuisson supérieure est positionnée sur une partie pivotante du châssis pour basculer entre une position horizontale et une position sensiblement verticale.

Un capotage forme la surface externe du gaufrier 1. Le capotage comprend un capot inférieur 81 et un capot supérieur 82. Le capot inférieur 81 forme ici une coque positionnée sous la plaque de cuisson 21 et sous la résistance 31. Le capotage supérieur 82 forme une coque positionnée à l'arrière de la résistance 32 et de la plaque de cuisson supérieure. Les utilisateurs peuvent être amenés à entrer en contact avec ce capotage et l'invention vise notamment à réduire la température de toucher, sans pour autant altérer les performances de cuisson du gaufrier 1.

Selon un mode de réalisation, l'ensemble des plaques de cuisson et capotages peut également être retourné par rapport au socle 53, afin d'obtenir une cuisson plus homogène et un meilleur remplissage des deux faces de la gaufre.

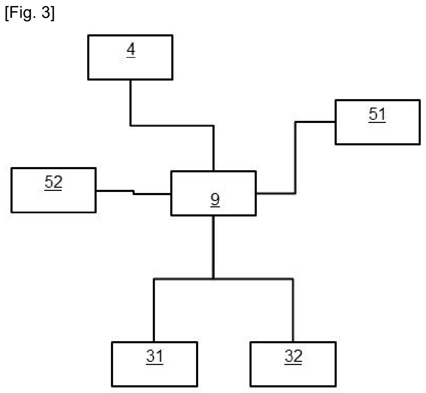

Le gaufrier 1 comprend en outre un circuit de commande 9 configuré pour récupérer une information du capteur de température 4, pour récupérer l'instruction de température de consigne de l'interface 51 et configuré pour activer l'indicateur de fin de cuisson 52 et alimenter sélectivement la résistance électrique 31 et la résistance électrique 32. La figure 3 est une représentation schématique des interactions du circuit de commande 9 avec différents composants du gaufrier 1.

Le circuit de commande 9 est en particulier configuré pour :
- définir une température de début de chauffe et une température de fin de chauffe en fonction de l'instruction de température de consigne récupérée ;
- définir une durée de maintien en fonction de l'instruction de température de consigne récupérée ;
- lorsque la température du capteur de température 4 tombe sous la température de début de chauffe, alimenter les résistances électriques 31 et 32 ;
- lorsque la température du capteur de température 4 dépasse la température de fin de chauffe, couper l'alimentation de la résistance électrique 31 et 32 ; pendant ladite durée de maintien et activer l'indicateur de fin de cuisson 52 à l'issue de ladite durée de maintien.

La température de fin de chauffe et la durée de maintien sont définies de manière à ce que, après la coupure de l'alimentation des résistances électriques et grâce à l'inertie du système, la température du capteur de température 4 atteigne la température de consigne à la fin de la durée de maintien.

La régulation électronique du gaufrier 1 tient ainsi compte de l'inertie du système de cuisson après avoir alimenté les résistances électriques 31 et 32 : Une fois la température de fin de chauffe détectée par le capteur de température 4, l'alimentation des résistances électriques 31 et 32 est interrompue pour une durée de maintien dépendant de l'instruction de température de consigne. La fin de la cuisson se termine ainsi pendant une phase où la température des plaques de cuisson continue à augmenter ou se stabilise du fait de l'inertie du système de chauffage, et non par un maintien d'apport d'énergie. Cette phase permet de limiter la hausse voir d'éviter le dépassement de température et ainsi de limiter la température de toucher sur le capotage. Selon des tests réalisés, la température de toucher du capotage a pu être rabaissée de plus de 30° par rapport à un gaufrier similaire régulé par un thermostat mécanique dont la température de consigne est identique. La durée de maintien sans alimentation des résistances électriques 31 et 32 peut varier entre une durée nulle et plusieurs dizaines de secondes, en fonction de l'instruction de température de consigne récupérée.

Ce mode de pilotage du gaufrier 1 est également aisément compatible avec un changement d'instruction de température de consigne en cours de cuisson. Pour une instruction de baisse de cuisson, la température de fin de chauffe et la durée de maintien peuvent être immédiatement rabaissées pour éventuellement conduire à une coupure immédiate de l'alimentation des résistances 31 et 32 et une activation de l'indicateur de fin de cuisson. Pour une instruction de hausse de cuisson, la température de fin de chauffe et la durée de maintien peuvent être immédiatement augmentées pour adapter la cuisson aux nouvelles instructions.

Selon la température des plaques de cuisson et la durée d'alimentation des résistances électriques 31 et 32, le comportement thermique du gaufrier lors de la coupure de l'alimentation des résistances électriques 31 et 32 varie. Afin d'optimiser les paramètres de température de fin de chauffe et de la durée de maintien, le circuit de commande 9 peut être configuré de manière à distinguer deux modes de chauffe selon la température du gaufrier 1 au moment de sa mise en route : si la température de la plaque de cuisson 21 est inférieure à un seuil, par exemple inférieur à 150°C, alors le circuit de commande 9 déclenche un cycle de préchauffe. Sinon il déclenche un cycle de cuisson.

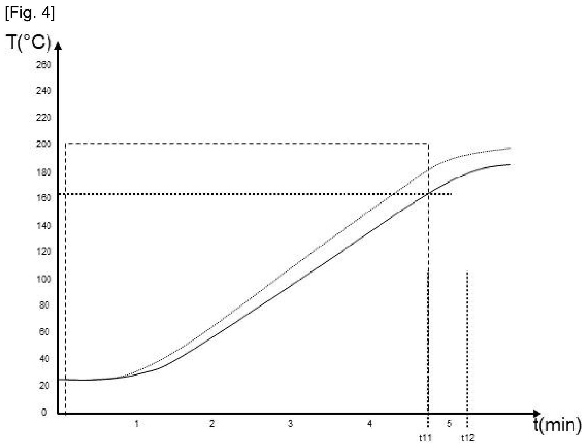

La figure 4 illustre un exemple d'application à un mode de préchauffage du gaufrier 1. La courbe en trait discontinu illustre l'état d'alimentation électrique des résistances de chauffage 31 et 32, la courbe en trait continu illustre la température du capteur de température 4 et la courbe en pointillés illustre la température effective sur la face de contact des plaques de cuisson. La cuisson est initiée à un instant t=0. La température du capteur de température 4 étant inférieure au seuil défini de 150°C, une instruction de préchauffage est appliquée par le circuit de commande 9. La température de début de préchauffe est fixée au minimum, la température de fin de préchauffe est fixée 15°C sous la température de consigne et la durée de maintien est fixée à 30 secondes. Le circuit de commande 9 initie la chauffe, les résistances 31 et 32 sont alors alimentées électriquement. Lors de l'échauffement, la température détectée par le capteur de température 4 est légèrement inférieure à la température des plaques de cuisson. Ce décalage est lié à la construction du capteur et de son interface avec les plaques. Il est pris en compte dans la température de consigne. La température des plaques de cuisson augmente alors progressivement. A l'instant t11, la température extrapolée du capteur de température 4 atteint la température de fin de préchauffe. Le circuit de commande 9 interrompt l'alimentation des résistances 31 et 32. L'absence d'alimentation des résistances 31 et 32 est maintenue pendant la durée de maintien jusqu'à l'instant t12, le signal de fin de cuisson étant alors activé pour signaler la fin de la préchauffe. Durant la durée de maintien, la température des plaques de cuisson augmente encore grâce à l'inertie du système mais de façon moins rapide. La température de fin de préchauffe et la durée de maintien sont définis (soit empiriquement, soit par simulation) de manière à ce qu'à l'instant t12, la température des plaques de cuisson soit sensiblement égale à la température de consigne. Selon la construction du gaufrier 1, ces valeurs peuvent être par exemple de 15°C à 20°C pour l'écart entre la température de fin de préchauffe et la température de consigne, et d'environ 30 secondes pour la durée de maintien. Par rapport à un gaufrier régulé par un thermostat mécanique, la coupure se fait donc plus tôt, ce qui permet d'économiser de l'énergie et de limiter l'échauffement.

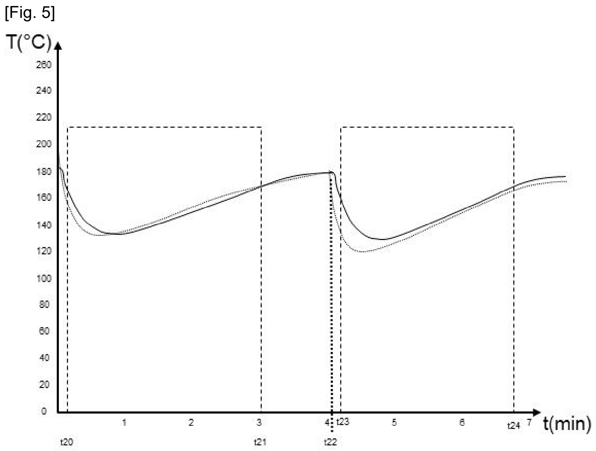

La figure 5 illustre un exemple d'application à un mode de cuisson du gaufrier 1 à puissance minimale, pour une cuisson dite moelleuse. La courbe en trait discontinu illustre l'état d'alimentation électrique des résistances de chauffage 31 et 32, la courbe en trait continu illustre la température extrapolée du capteur de température 4 et la courbe en pointillés illustre la température effective sur la face de contact des plaques de cuisson. Préalablement à l'instant t=0, le gaufrier 1 a terminé le cycle précédent (de préchauffe ou de cuisson) et est proche de la température de consigne. Une instruction de température de consigne minimum est appliquée sur l'interface 51. La température de début de chauffe est fixée à 169°C, la température de fin de chauffe est fixée à 170°C et la durée de maintien est fixée nulle. De la pâte à gaufre est versée entre les plaques de cuisson à l'instant t=0. La température des plaques de cuisson baisse alors. A l'instant t20, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t21, la température extrapolée du capteur de température 4 atteint la température de fin de chauffe de 170°C. Le circuit de commande 9 interrompt l'alimentation des résistances 31 et 32. Le signal de fin de cuisson est activé pour signaler la fin de la cuisson à cet instant t21. Ensuite, la température des plaques de cuisson augmente encore mais de façon moins rapide grâce à de l'inertie du système. Un nouveau cycle de cuisson est initié à l'instant t22, avec versement de pâte à gaufre entre les plaques de cuisson. La température des plaques de cuisson baisse alors. A l'instant t23, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t24, la température extrapolée du capteur de température 4 atteint la température de fin de chauffe de 170°C. Le circuit de commande 9 interrompt l'alimentation des résistances 31 et 32. Le signal de fin de cuisson est activé pour signaler la fin de la cuisson à cet instant t24.

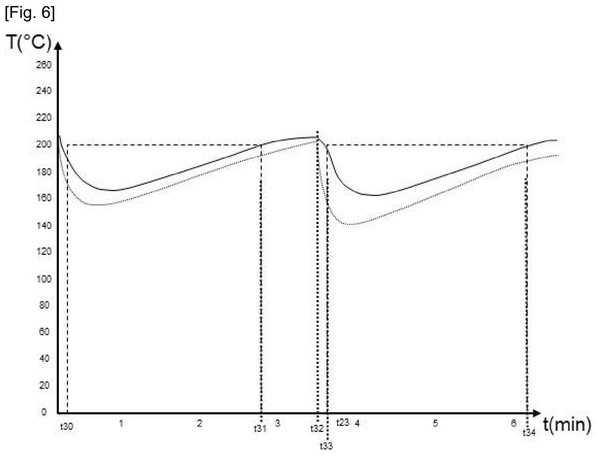

La figure 6 illustre un exemple d'application à un mode de cuisson du gaufrier 1 à puissance moyenne, pour une cuisson dite moelleuse. La courbe en trait discontinu illustre l'état d'alimentation électrique des résistances de chauffage 31 et 32, la courbe en trait continu illustre la température extrapolée du capteur de température 4 et la courbe en pointillés illustre la température effective sur la face de contact des plaques de cuisson. Préalablement à l'instant t=0, le gaufrier 1 a terminé le cycle précédent (de préchauffe ou de cuisson) et est proche de la température de consigne. Une instruction de température de consigne moyenne est appliquée sur l'interface 51. La température de début de chauffe est fixée à 199°C, la température de fin de chauffe est fixée à 200°C et la durée de maintien est fixée nulle. De la pâte à gaufre est versée entre les plaques de cuisson à l'instant t=0. La température des plaques de cuisson baisse alors. A l'instant t30, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t31, la température extrapolée du capteur de température 4 atteint la température de fin de chauffe de 200°C. Le circuit de commande 9 interrompt l'alimentation des résistances 31 et 32. Le signal de fin de cuisson est activé pour signaler la fin de la cuisson à cet instant t31. Ensuite, la température des plaques de cuisson augmente encore mais de façon moins rapide grâce à de l'inertie du système. Un nouveau cycle de cuisson est initié à l'instant t32, avec versement de pâte à gaufre entre les plaques de cuisson. La température des plaques de cuisson baisse alors. A l'instant t33, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t34, la température extrapolée du capteur de température 4 atteint la température de fin de chauffe de 200°C. Le circuit de commande 9 interrompt l'alimentation des résistances 31 et 32. Le signal de fin de cuisson est activé pour signaler la fin de la cuisson à cet instant t34.

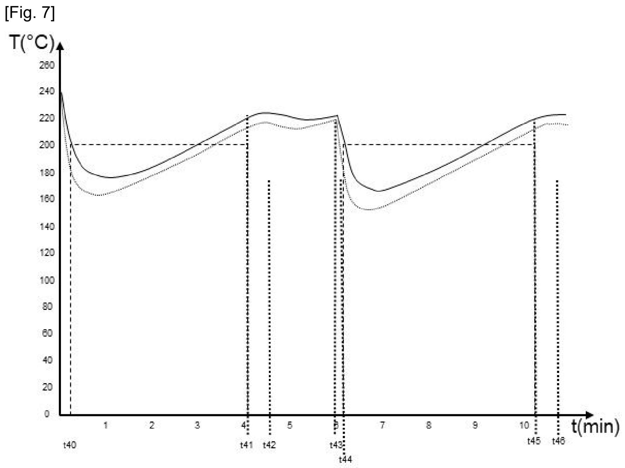

La figure 7 illustre un exemple d'application à un mode de cuisson du gaufrier 1 à puissance maximale, pour une cuisson dite moelleuse. La courbe en trait discontinu illustre l'état d'alimentation électrique des résistances de chauffage 31 et 32, la courbe en trait continu illustre la température extrapolée du capteur de température 4 et la courbe en pointillés illustre la température effective sur la face de contact des plaques de cuisson. Préalablement à l'instant t=0, le gaufrier 1 a terminé le cycle précédent (de préchauffe ou de cuisson) et est proche de la température de consigne. Une instruction de température de consigne maximale est appliquée sur l'interface 51. La température de début de chauffe est fixée à 209°C, la température de fin de chauffe est fixée à 210°C et la durée de maintien est fixée à 30 secondes. De la pâte à gaufre est versée entre les plaques de cuisson à l'instant t=0. La température des plaques de cuisson baisse alors. A l'instant t40, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t41, la température extrapolée du capteur de température 4 atteint la température de fin de chauffe de 210°C. Le circuit de commande 9 interrompt l'alimentation des résistances 31 et 32 pendant la durée de maintien jusqu'à l'instant t42. Le signal de fin de cuisson est activé pour signaler la fin de la cuisson à cet instant t42. Un nouveau cycle de cuisson est initié à l'instant t43, avec versement de pâte à gaufre entre les plaques de cuisson. La température des plaques de cuisson baisse alors. A l'instant t44, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t45, la température extrapolée du capteur de température 4 atteint la température de fin de chauffe de 210°C. Le circuit de commande 9 interrompt l'alimentation des résistances 31 et 32 pendant la durée de maintien jusqu'à l'instant t46. Le signal de fin de cuisson est activé pour signaler la fin de la cuisson à cet instant t46.

Dans ce mode de cuisson, la température de fin de chauffe est inférieure à la température de consigne. La température de fin de chauffe et la durée de maintien sont définies de manière à ce qu'à l'instant t42 ou t46, la température des plaques de cuisson soit sensiblement égale à la température de consigne.

Ainsi, la durée de maintien peut être nulle pour une plage d'instructions de température de consigne inférieure, et non nulle à partir d'une instruction de température de consigne intermédiaire. Cela permet de ne pas impacter le temps de cuisson pour les réglages de température de consigne inférieurs, et de réduire les consommation électrique et échauffements pour les températures de consigne intermédiaires à supérieurs.

Dans ces modes de cuisson dits moelleux, l'alimentation électrique des résistances 31 et 32 est maintenue en continu jusqu'au dépassement de la température de consigne de fin de chauffe. L'amplitude de variation de température pendant la phase de chauffe peut alors être accrue.

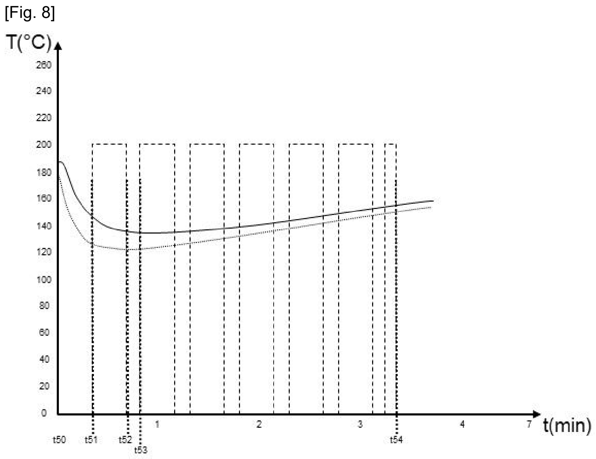

La figure 8 illustre un exemple d'application à un mode de cuisson du gaufrier 1 à puissance minimale, pour une cuisson dite croustillante. La courbe en trait discontinu illustre l'état de conduction des résistances de chauffage 31 et 32, la courbe en trait continu illustre la température extrapolée du capteur de température 4 et la courbe en pointillés illustre la température effective sur la face de contact des plaques de cuisson. Préalablement à l'instant t=0, le gaufrier 1 a terminé le cycle précédent (de préchauffe ou de cuisson) et est proche de la température de consigne. Une instruction de température de consigne minimum est appliquée sur l'interface 51. La température de début de chauffe est fixée à 159°C, la température de fin de chauffe est fixée à 160°C et la durée de maintien est fixée nulle. De la pâte à gaufre est versée entre les plaques de cuisson à l'instant t50=0. La température des plaques de cuisson baisse alors. A l'instant t51, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t52, l'alimentation des résistances 31 et 32 est interrompue, puis reprise à l'instant t53. Le circuit de commande 9 réalise ensuite une alternance d'alimentations et de coupures d'alimentation des résistances 31 et 32 pendant la phase de chauffe. La température extrapolée du capteur de température 4 atteint la température de fin de chauffe de 160°C à l'instant t54. Le circuit de commande 9 interrompt l'alimentation des résistances 31 et 32. Le signal de fin de cuisson est activé pour signaler la fin de la cuisson à cet instant t54.

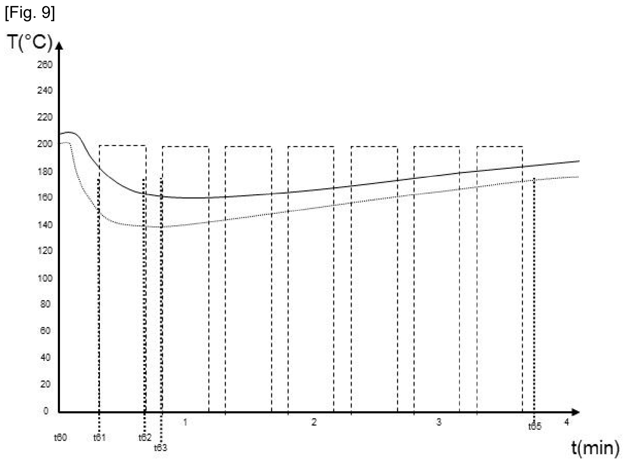

La figure 9 illustre un exemple d'application à un mode de cuisson du gaufrier 1 à puissance médiane, pour une cuisson dite croustillante. La courbe en trait discontinu illustre l'état d'alimentation des résistances de chauffage 31 et 32, la courbe en trait continu illustre la température extrapolée du capteur de température 4 et la courbe en pointillés illustre la température effective sur la face de contact des plaques de cuisson. Préalablement à l'instant t=0, le gaufrier 1 a terminé le cycle précédent (de préchauffe ou de cuisson) et est proche de la température de consigne. Une instruction de chauffage médiane est appliquée sur l'interface 51. La température de début de chauffe est fixée à 189°C, la température de fin de chauffe est fixée à 190°C et la durée de maintien est nulle. De la pâte à gaufre est versée entre les plaques de cuisson à l'instant t60=0. La température des plaques de cuisson baisse alors. A l'instant t61, la température détectée par le capteur de température 4 descend sous la température de début de chauffe. Le circuit de commande 9 initie alors la chauffe, les résistances 31 et 32 sont alors alimentées électriquement. La température des plaques de cuisson augmente alors progressivement. A l'instant t62, l'alimentation des résistances 31 et 32 est interrompue, puis reprise à l'instant t63. Le circuit de commande 9 réalise ensuite une alternance d'alimentations et de coupures d'alimentation des résistances 31 et 32 pendant la phase de chauffe. La température extrapolée du capteur de température 4 atteint la température de fin de chauffe de 190°C à l'instant t65. Le circuit de commande 9 interrompt l'alimentation des résistances 31 et 32. Le signal de fin de cuisson est activé pour signaler la fin de la cuisson à cet instant t65, à l'issue de la durée de maintien.

Dans ces modes de cuisson dits croustillants, l'alimentation électrique des résistances 31 et 32 est maintenue par intermittence jusqu'au dépassement de la température de consigne de fin de chauffe. L'amplitude de variation de température pendant la phase de chauffe peut alors être réduite.

Avantageusement, la différence entre les températures de début de chauffe et de fin de chauffe générées, pour une instruction de température de consigne récupérée, est inférieure à 10°, voire de 1°C. On limite ainsi la montée en température des plaques de cuisson après l'interruption de l'alimentation et on limite ainsi la température de toucher sur le capotage du gaufrier 1. A titre de comparaison, un gaufrier électrique régulé par un thermostat mécanique a un écart entre les températures de début de chauffe et de fin de chauffe de l'ordre de 10°C à 20°C, ce qui implique une amplitude de régulation et des échauffements plus élevés.

Dans l'exemple illustré, le circuit de commande 9 est logé dans un boîtier 53. Le boîtier 53 est ici également utilisé pour supporter l'interface de sélection 51 et l'indicateur de fin de cuisson 52. Le boîtier peut également comporter un commutateur pour basculer entre deux modes de cuisson, par exemple le mode croustillant et le mode moelleux, et éventuellement un indicateur du mode de cuisson.

Selon un aspect indépendant de l'invention, le gaufrier 1 dispose d'une plaque de cuisson 21 amovible. La régulation électronique permet d'offrir, sans surcoût matériel, une sécurité lors du préchauffage pour détecter l'absence de cette plaque de cuisson. En effet, lancer un préchauffage du gaufrier 1 en l'absence de plaque de cuisson peut amener à sa destruction. En utilisant uniquement la détection de la consigne de température de fin de cuisson pour couper l'alimentation des résistances 31 et 32, la température effective dans le gaufrier 1 pourrait monter au-delà des températures admissibles par les composants du gaufrier 1 et amener à la fusion des capotages ou à la destruction des circuits électriques.

Le circuit de commande 9 est en outre configuré pour mesurer la vitesse de montée en température détectée par le capteur de température 4. Lorsque le gaufrier est utilisé normalement, avec ses plaques de cuisson, la montée en température lors de la préchauffe est inférieur à 1°C/ seconde. Cette valeur dépend évidemment de la construction du gaufrier 1 et de la masse de la plaque de cuisson à chauffer. En l'absence de plaque de cuisson, le capteur de température 4 est exposé directement au rayonnement des résistances de chauffage 31 et 32 et, du fait de son inertie très faible, sa montée en température lors de la préchauffe sera plus rapide. En définissant un seuil de détection, par exemple de l'ordre de 1.5°C/ seconde, il est donc possible pour le circuit de commande 9 de détecter la présence ou l'absence de plaque de cuisson lors de la phase de préchauffe. En cas d'absence de plaque de cuisson, l'alimentation des résistances de chauffage 31 et 32 sera coupée avant que des températures trop élevées ne soient atteintes. L'utilisateur peut également être averti du défaut via un signal spécial émis par l'indicateur de fin de cuisson 52.

A cet effet, le circuit de commande 9 peut définir une température de fin de chauffe en fonction de l'instruction de consigne de température de chauffe récupérée. Le circuit de commande 9 est configuré pour déterminer que la température de la plaque de cuisson 21 est initialement inférieure à un seuil, par exemple inférieur à 150°C.

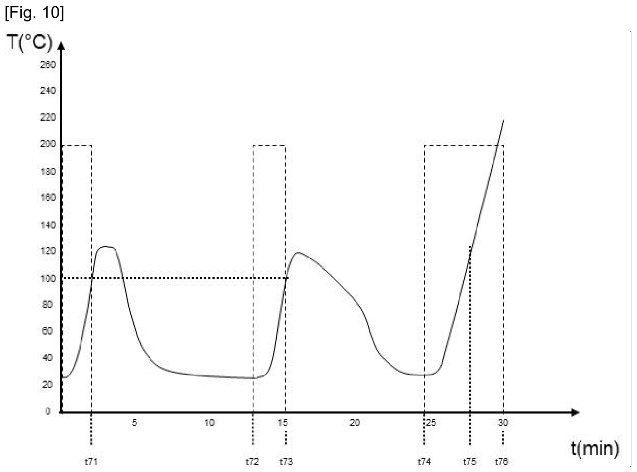

La figure 10 est un diagramme illustrant un exemple de fonctionnement d'une telle protection. La courbe en trait discontinu illustre l'état d'alimentation électrique des résistances de chauffage 31 et 32, la courbe en trait continu illustre la température extrapolée du capteur de température 4.

A l'instant t=0, une instruction de préchauffage est donnée au circuit de commande 9. A cet instant, le gaufrier 1 est à température ambiante, les plaques de cuisson ont été retirées. La consigne de puissance générée est alors de la puissance nominale, par exemple de 1200W. Le circuit de commande 9 initie l'alimentation des résistances 31 et 32. Le capteur de température 4 détecte une montée en température. A l'instant t71, le capteur de température 4 détecte que le seuil de vitesse de montée en température est dépassé. Le circuit de commande 9 coupe l'alimentation électrique des résistances 31 et 32. La température dans le gaufrier 1 reste alors dans des limites acceptables, ici aux alentours de 100°C. La température à l'intérieur du gaufrier 1 augmente encore sous l'effet de l'inertie thermique, avant de baisser jusqu'à une température ambiante.

A l'instant t72, une instruction de préchauffage est donnée au circuit de commande 9. A cet instant, le gaufrier 1 est à température ambiante, les plaques de cuisson ont été retirées. La consigne de puissance générée est alors définie sur la tolérance basse des résistances 31 et 32, soit par exemple de 1080W. Le circuit de commande 9 initie l'alimentation des résistances 31 et 32. Le capteur de température 4 détecte une montée en température. A l'instant t73, le capteur de température 4 détecte que le seuil de vitesse de montée en température est dépassé. Le circuit de commande 9 coupe l'alimentation électrique des résistances 31 et 32. La température dans le gaufrier 1 reste alors dans des limites acceptables. La température à l'intérieur du gaufrier 1 augmente encore sous l'effet de l'inertie thermique, avant de baisser jusqu'à une température ambiante.

A l'instant t74, une instruction de préchauffage est donnée au circuit de commande 9. A cet instant, le gaufrier 1 est à température ambiante, les plaques de cuisson ont été mises en place dans le gaufrier 1. La consigne de puissance est alors du maximum considéré lors de la certification normative du produit, soit par exemple de 1380W. Le circuit de commande 9 initie l'alimentation des résistances 31 et 32. Le capteur de température 4 détecte une montée en température. A l'instant t76, la température extrapolée du capteur de température 4 atteint la température de fin de préchauffe, le circuit de commande 9 interrompt donc l'alimentation des résistances 31 et 32. La chauffe du gaufrier 1 à puissance maximale en présence des plaques de cuisson n'induit donc pas une coupure intempestive de l'alimentation électrique des résistances 31 et 32.

En l'état, le système est assez sensible pour détecter la présence ou l'absence de plaques de cuisson sur toute la plage de puissance possible de fonctionnement du gaufrier 1.

Ces fonctionnalités peuvent bien entendu être combinées aux fonctionnalités décrites pour les autres modes de réalisation.

## Revendications

1. Gaufrier (1), **caractérisé en ce qu'**il comprend :
- une plaque de cuisson (21) ;
- une résistance électrique chauffante (31) configurée pour réchauffer la plaque de cuisson ;
- un capteur de température (4) accolé à la plaque de cuisson ;
- un capotage formant la surface externe du boîtier ;
- une interface de sélection (51) d'une instruction de température de consigne;
- un indicateur de fin de cuisson (52) ;
- un circuit de commande (9) configuré pour récupérer une information de température du capteur de température (4), pour récupérer l'instruction de température de consigne et configuré pour alimenter sélectivement la résistance électrique (31) et activer l'indicateur de fin de cuisson (52), le circuit de commande étant configuré pour :
- définir une température de début de chauffe et une température de fin de chauffe en fonction de l'instruction de température de consigne récupérée ;
- définir une durée de maintien en fonction de l'instruction de température de consigne récupérée ;
- lorsque la température du capteur de température (4) tombe sous la température de début de chauffe, alimenter la résistance électrique jusqu'à ce que la température du capteur de température (4) dépasse la température de fin de chauffe, couper l'alimentation de la résistance électrique (31) pendant ladite durée de maintien et activer l'indicateur de fin de cuisson (52) à l'issue de ladite durée de maintien.

2. Gaufrier (1) selon la revendication 1, dans lequel, pour une plage d'instructions de température de consigne inférieure, la durée de maintien est nulle et la température de fin de chauffe est sensiblement égale à la température de consigne et, à partir d'une instruction de température intermédiaire de consigne, la durée de maintien est non nulle et la température de fin de chauffe est inférieure à la température de consigne.

3. Gaufrier (1) selon la revendication 1 ou 2, dans lequel le circuit de commande (9) est en outre configuré afin que :
- lorsque la température du capteur de température (4) est inférieure à un seuil prédéfini, un cycle de préchauffe est initié ;
- la température de fin de chauffe et la durée de maintien sont spécifiques à ce cycle de préchauffe.

4. Gaufrier (1) selon la revendication 3, dans lequel ledit seuil prédéfini est inférieur à 160°C, la température de fin de chauffe du cycle de préchauffe est définie avec un écart d'au moins 10°C par rapport à la température de consigne et la durée de maintien du cycle de préchauffe est d'au moins 15secondes.

5. Gaufrier (1) selon l'une quelconque des revendications précédentes, comprenant en outre une interface de sélection d'un mode de chauffe, ladite alimentation de la résistance électrique jusqu'à ce que la température du capteur de température dépasse la température de fin de chauffe étant sélectivement maintenue en continu ou par intermittence en fonction du mode de chauffe sélectionné.

6. Gaufrier (1) selon l'une quelconque des revendications précédentes, dans lequel la différence entre les températures de début de chauffe et de fin de chauffe définies, pour une instruction de température de chauffe récupérée, est inférieure à 10°.

7. Gaufrier (1) selon l'une quelconque des revendications précédentes, dans lequel la plaque de cuisson (21) est solidarisée de façon amovible à un châssis (83) et dans lequel le circuit de commande (9) est en outre configuré afin de déterminer la vitesse de montée en température du capteur de température (4), et configuré pour extrapoler la présence ou l'absence de plaque de cuisson (21) en fonction de la vitesse de montée en température déterminée.

8. Gaufrier (1) selon la revendication 7, dans lequel le circuit de commande (9) est en outre configuré afin de couper l'alimentation électrique de la résistance électrique (31) si une absence de plaque de cuisson (21) a été extrapolée.

9. Gaufrier (1) selon l'une quelconque des revendications précédentes, comprenant en outre une autre plaque de cuisson et une autre résistance électrique chauffante (32) configurée pour réchauffer l'autre plaque de cuisson, le circuit de commande (9) étant configuré pour alimenter ou couper l'alimentation des résistances électriques (31, 32) en simultané.

10. Gaufrier (1), **caractérisé en ce qu'**il comprend :
- une plaque de cuisson (21) amovible ;
- une résistance électrique chauffante (31) configurée pour réchauffer la plaque de cuisson ;
- un capteur de température (4) accolé à la plaque de cuisson ;
- une interface de sélection (51) d'une instruction de température de consigne ;
- un circuit de commande (9) configuré pour récupérer une information de température du capteur de température (4), pour récupérer l'instruction de température de consigne et configuré pour alimenter sélectivement la résistance électrique (31), le circuit de commande étant configuré pour :
- définir une température de fin de chauffe en fonction de l'instruction de température de consigne récupérée en fonction de l'instruction de température de consigne récupérée ;
- alimenter la résistance électrique et déterminer la vitesse de montée en température du capteur de température (4) ;
- extrapoler la présence ou l'absence de plaque de cuisson (21) en fonction de la vitesse de montée en température déterminée.
